# EUROPÄISCHE PATENTSCHRIFT

(11) **EP 0 309 895 B1**
(45) Veröffentlichungstag und Bekanntmachung des Hinweises auf die Patenterteilung: **23.06.1993**
(21) Anmeldenummer: 88115525.3
(22) Anmeldetag: 22.09.1988
(51) Int. Cl.: H01B 17/30, H02G 3/08

(54) **Explosionsgeschützte und/oder schlagwettergeschützte Steckdurchführung**
Explosion-proof and/or fire damp-proof electrical feedthrough
Traversée électrique résistant à l'explosion et/ou au coup de grisou

(30) Priorität: 28.09.1987 DE 3732576
(43) Veröffentlichungstag der Anmeldung: 05.04.1989
(73) Patentinhaber: Asea Brown Boveri Aktiengesellschaft, 68309 Mannheim (DE)
(72) Erfinder: Faber, Karl, D-6903 Neckargemünd (DE); Magin, Andreas, D-6934 Neckargerach (DE); Schwarz, Gerhard, D-6936 Allemühl (DE)
(74) Vertreter: Rupprecht, Klaus, Dipl.-Ing.

(56) Entgegenhaltungen:
- DE-A- 3 710 276
- DE-B- 1 490 607
- DE-C- 901 070
- US-A- 1 834 142
- US-A- 3 092 360

## Beschreibung

Die Erfindung betrifft eine explosionsgeschützte und/oder schlagwettergeschützte Steckdurchführung, mit einem Hülsenkörper, darin befindlichen Führungselementen für mehrere elektrische Aderleitungen, die einen abisolierten Bereich aufweisen, der sich innerhalb des Bereiches der Hülsenkörpererstreckung befindet, und mit einem Gießharzausguß und geht aus von der DE-A-1 490 607.

Steckdurchführungen der eingangs genannten Art dienen dazu, elektrische Leitungen zünddurchschlagssicher durch eine Wandung hindurchzuführen. Diese elektrischen Leitungen, die als Kabel ausgebildet sind und eine Drahtseele mit Isolierung besitzen, müssen, um zünddurchlagssicher durch eine Wandung hindurchgeführt werden zu können, teilweise abisoliert sein und der abisolierte Bereich muß in Gießharz eingegossen sein.

Derartige Steckdurchführungen besitzen im allgemeinen einen rohrförmigen Körper, der an seinen beiden Enden Führungsmittel aufweist, durch die die einzelnen Kabelleitungen oder Adern in ihrer relativen Lage zueinander geführt sind; diese Führungselemente sind meist als Lochplatten ausgebildet; die einzelenen Adern müssen durch die einzelnen Löcher hindurchgeführt und eingefädelt werden, was sehr aufwendig ist.

Die DE-A-1 490 607 offenbart als Führungselemente Platten mit Schlitzen.

Aufgabe der Erfindung ist es, eine Steckdurchführung der eingangs genannten Art zu schaffen, deren Herstellung einfacher ist als die der bekannten Steckdurchführungen und bei der die gesamte Montage maschinell durchführbar ist. Dabei soll die Anzahl der durchzuführenden Adern groß sein.

Diese Aufgabe wird erfindungsgemäß dadurch gelöst, daß innerhalb des Hülsenkörper ein trommelartiger Innenkörper vorgesehen ist, der an seinen beiden Enden gleichmäßig am Umfang verteilte, axial verlaufende, jeweils miteinander fluchtende Nuten aufweist, in die die Kabellitzen mit ihrer Isolation einrastbar eingesetzt sind, und daß an einem Ende des Hülsenkörpers der Anzahl der Nuten entsprechende, ebenfalls axial verlaufende Innenrillen vorgesehen sind, die sich zum freien Ende des Hülsenkörpers hin konisch verjüngen.

Bei einer ersten Ausgestaltung befindet somit sich innerhalb des Hülsenkörpers als Führungselement lediglich der trommelartige Innenkörper, mit den Nuten, in die die Aderleitungen mit ihrer Isolation einrastbar eingesetzt sind. Nach dem Einsetzen der Aderleitungen in die Nuten ergibt sich eine transportierbare Einheit Innenkörper-Aderleitungen. Diese Einheit kann dann in den Hülsenkörper eingeführt werden, wobei die Innenrillen, die sich zum freien Ende des Hülsenkörpers hin konisch verjüngen, die Aderleitungen in den Nuten festdrücken. Aufgrund der erforderlichen Abstände zwischen den abisolierten Leiterbereichen bzw. Litzenbereichen kann natürlich nur eine begrenzte Anzahl von Aderleitungen eingesetzt werden.

Daher dienen bei einer weiteren, erweiterten Ausgestaltung gemäß kennzeichnendem Teil des Anspruches 2 als Führungselemente der Innenkörper, ein erster ringförmiger Grundkörper, der den Innenkörper konzentrisch umfaßt, ggf. ein weiterer Grundkörper, der den ersten Grundkörper umgibt, und der Hülsenkörper, die die jeweils in geeigneter Form und Anordnung axial verlaufende Nuten bzw. der Anzahl der Nuten ensprechende Innenrillen aufweisen, die die Aderleitungen zwischen sich nehmen und führen.

Der Konuswinkel beträgt bei beiden Ausführungen vorteilhaft 1°, wodurch eine Verspannung der Isolierung der Aderleitungen im Innenraum der Nuten und Innenrillen erzielt wird.

Bei der ersten Ausgestaltung ist der Innenkörper also trommelförmig ausgebildet und zur Bildung der Innenrillen besitzt der Hülsenkörper einen Innenflansch, dessen Innendurchmesser dem Außendurchmesser des umfaßten Innenkörpers im Bereich der Nuten entspricht. Dabei besitzt in bevorzugter Ausgestaltung der Innenkörper an seinen beiden Enden Bordränder, deren Außendurchmesser der Tiefe der Nuten entsprechend größer ist als der Durchmesser des dazwischen befindlichen Bereiches. Die Länge des mittleren Bereiches entspricht in bevorzugter Ausführung angenähert der Länge des jeweiligen Bordrandes.

Bei der anderen, besonders vorteilhaften Ausgestaltung umfaßt die Steckdurchführung einen Hülsenkörper, in dem zwei in Abstand zueinander angeordnete Grundkörperteile vorgesehen sind; diese Grundkörper sind ringförmig ausgebildet, wodurch erreicht wird, daß Innenrillen auch auf der Innenfläche der Grundkörper angeordnet bzw. eingeformt sein können. Wenn der zapfenartige Innenkörper entsprechende Nuten aufweist, die den Nuten auf der Außenfläche der Grundkörper entsprechen, wobei die Zahl natürlich wegen des verringerten Durchmessers verringert sein wird, dann erhält man eine Zuordnung zweier Aderleitungsmengen, von denen die eine konzentrisch innerhalb der anderen liegt. Der konische Verjüngungswinkel sowohl an der Hülse als auch im Bereich des einen Grundkörpers ist, wie oben erwähnt, auch hier ca. 1°. Dabei ist es zweckmäßig, daß die Innenrillen mit dem konisch verjüngten Durchmesser sich an einem Ende des Hülsenkörpers befinden.

Diese Ausgestaltung führt dazu, daß die Anzahl der außenliegenden Aderleitungen doppelt so groß sein kann wie die Anzahl der innenliegenden Aderleitungen; in besonders vorteilhafter Weise sind die innen befindlichen Aderleitungen den äußeren so zugeordnet, daß sich jeweils eine innenliegende Aderleitung zwischen zwei außenliegenden Aderleitungen befindet. Natürlich können auch Aderleitungen mit unterschiedlichen Querschnitten in einer Durchführung untergebracht sein.

Mit anderen Worten: Zur Bildung der zweiten Ausgestaltung der Erfindung kann der Grundkörper durch zwei Grundkörperteile gebildet werden, die in Abstand zueinander in den Hülsenkörper eingesetzt werden. Beide Grundkörperteile besitzen in jedem Fall auf ihrer Außenfläche bzw. auf ihrem Außenumfang Nuten und lediglich einer der beiden Grundkörper besitzt an seinem inneren Bereich Innenrillen.

In einer weiteren Ausgestaltung der Erfindung ist es auch möglich, daß der Grundkörper aus einem einzigen Stück besteht; dazu besitzt er an seinen beiden Enden die Leisten mit den Nuten und an einem Ende an der Innenfläche eine Leiste mit den Innenrillen; der Außendurchmesser des Bereiches zwischen den Leisten ist natürlich kleiner als der Kerndurchmesser der Leisten und darüberhinaus besitzt dieser Bereich auch Querausnehmungen.

Der Innenkörper kann aus zwei in Abstand zueiander angeordneten Innenkörperteilen gebildet sein, die an ihren Außenflächen die Nuten aufweisen und mittels eines Distanzstückes zusammengehalten sind; der Innenkörper kann auch einstückig ausgebildet sein, wobei Einfräsungen beidseitig vorgesehen sein müssen, damit die Nuten auch gebildet werden können.

Durch geeignete Öffnungen, Sacklochbohrungen und ein Querschlitz im Innenteil sowie durch Querausnehmungen im Grundkörper ist das Vergießen nach der Montage möglich.

Weitere vorteilhafte Ausgestaltungen und Verbesserungen sind den weiteren Unteransprüchen zu entnehmen.

Anhand der Zeichnung, in der drei Ausführungsbeispiele der Erfindung dargestellt sind, sollen die Erfindung sowie weitere vorteilhafte Ausgestaltungen und Verbesserungen und weitere Vorteile näher erläutert und beschrieben werden.

Es zeigt:
- Figur 1: eine Längsschnittansicht durch eine erste Ausgestaltung der Steckdurchführung,
- Figur 2: eine Schnittansicht gemäß Schnittlinie II-II der Figur 1,
- Figur 3: eine teilweise Schnittansicht des Hülsenkörpers,
- Figur 4: eine Schnittansicht einer zweiten Ausgestaltung einer Steckdurchführung, gem. Schnittlinie IV-IV der Figur 5,
- Figur 5: eine Aufsicht auf die Steckdurchführung gemäß Figur 4,
- Figur 6: eine Aufsicht auf eine dritte Ausführung der Steckdurchführung,
- Figur 7: eine Schnittansicht gemäß der Schnittlinie VII-VII der Figur 6,
- Figur 8: eine Seitenansicht einer weiteren Ausgestaltung eines zapfenartigen Innenkörpers,
- Figur 9: eine Schnittansicht gemäß der Schnittlinie IX-IX der Figur 8,
- Figur 10: eine Schnittansicht gemäß der Schnittlinie X-X der Figur 8,
- Figur 11: eine teilweise Schnittansicht einer weiteren Ausgestaltung eines Ringkörpers und
- Figur 12: eine Schnittansicht gemäß der Schnittlinie XII-XII der Figur 11.

Die erfindungsgemäße Steckdurchführung besitzt einen Hülsenkörper 10, an dessen einem Ende ein außen angeformter Flanschansatz 11 vorgesehen ist. Am gegenüberliegenden Ende des Hülsenkörpers 10 ist ein Innenflansch 12 angeformt, der mit mehreren, am Umfang gleichmäßig verteilten Innenrillen 13 versehen ist. Es sind beim Ausführung beispiel insgesamt acht Innenrillen 13 vorhanden.

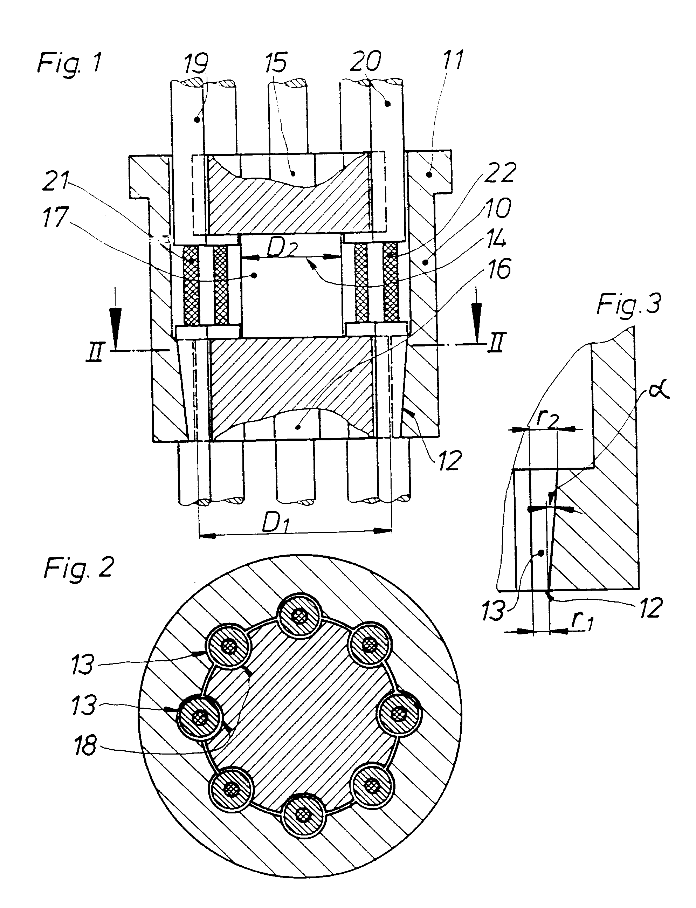

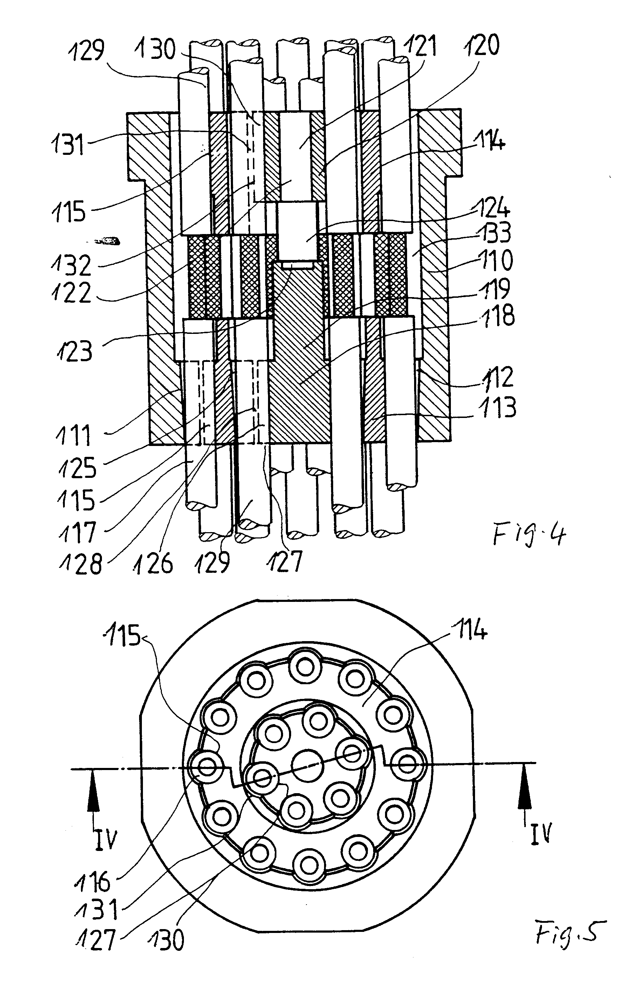

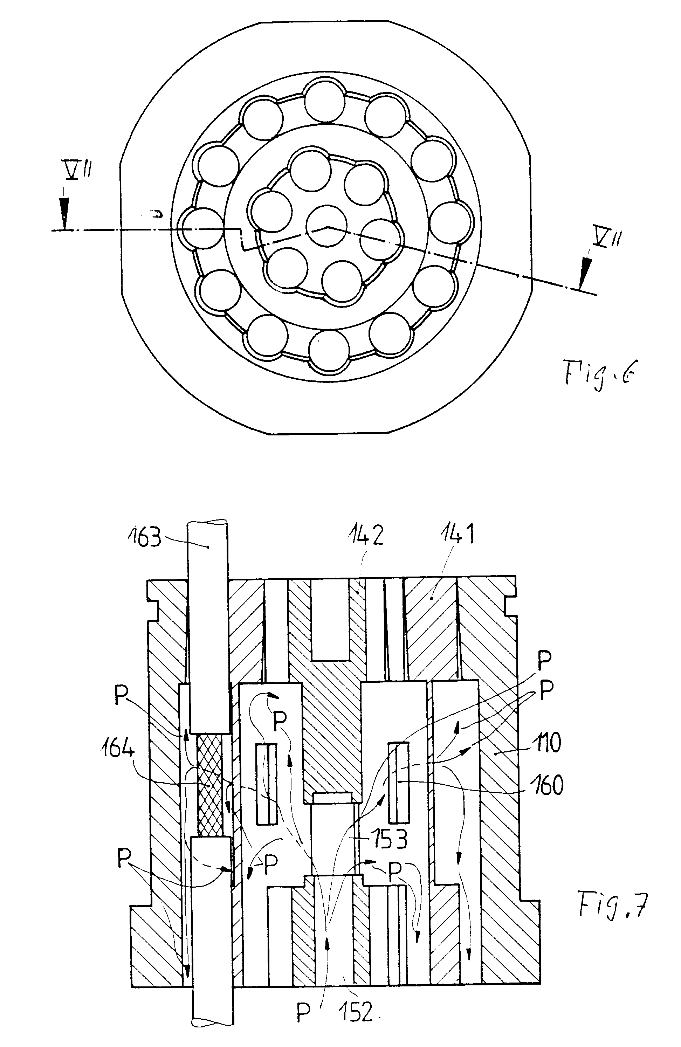

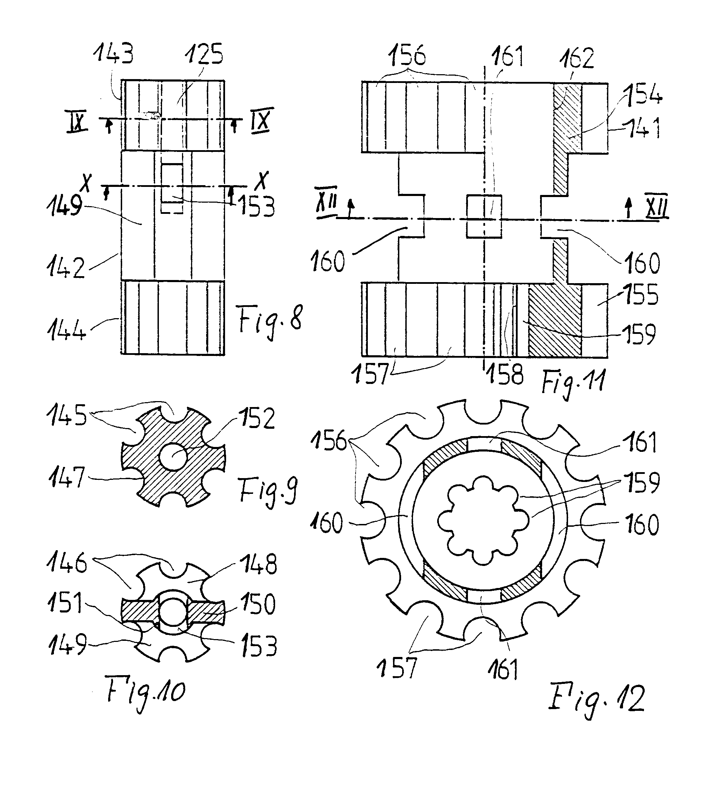

Eine der Innenrillen ist in der Figur 3 näher dargestellt. Die Innenrille 13 ist so ausgeformt, daß sie sich von dem freien Ende des Hülsenkörpers 10 aus konisch erweitert, so daß der Rillendurchmesser bzw. Rillenradius r₁ am freien Ende des Hülsenkörpers kleiner ist als der Rillenradius r₂ am inneren Ende des Flanschansatzes 11. Der Konuswinkel Alpha ist dabei ca. 1°.

Im Inneren des Hülsenkörpers 10 befindet sich ein trommelartiger Grundkörper 14, an dessen freien Enden jeweils ein umlaufender Bordrand 15 und 16 mit gegenüber dem dazwischen befindlichen Bereich 17 erweitertem Durchmesser D₁ angeformt sind. Der Durchmesser des mittleren Bereiches 17 ist D₂.

Die beiden Bordränder 15 und 16 besitzen am Umfang verteilte, axial verlaufende Nuten 18, die sich im montierten Zustand mit den Innenrillen 13 zu einem rohrartigen Hohlraum ergänzen. Die Tiefe der Nuten 18 ist konstant und der Radius der Nuten 18, die kreisförmig ausgebildet sind, ist so bemessen, daß Aderleitungen 19 bzw. 20, im folgenden auch Kabellitzen 19 bzw. 20 genannt, mit Isolierung darin eingerastet werden können, wenn sie in die Nuten 18 hineingedrückt werden. Die beiden Kabellitzen 19 und 20 haben, wie aus Figur 1 ersichtlich ist, einen abisolierten Bereich 21 und 22, dessen Länge - entsprechend den Vorschriften für explosionsgeschütze Wanddurchführungen - der Länge des mittleren Bereiches 17 entspricht bzw. geringfügig kleiner ist.

Zur Montage der Steckdurchführung werden nun die einzelnen Kabellitzen 19 und 20, die schon die abisolierten Bereiche 21 und 22 aufweisen, in die Nuten 18 derart hineingedrückt, daß die abisolierten Bereiche 21 und 22 zwischen den Bordrändern 15 und 16 liegen. Aufgrund der Bemessung der Nuten 18, insbesondere aufgrund der Tiefe und der Breite der Nuten 18 bleiben die Kabellitzen 19 und 20 in den Nuten 18 genau eingerastet und fallen ohne weiteres nicht heraus. Die Einheit von Grundkörper 14 und Kabellitzen 19 und 20 wird in den Hülsenkörper 10 eingefädelt und zwar dergestalt, daß die außerhalb des Randbordes 16 liegenden Hälften der Kabellitzen 19 bzw. 20 bzw. deren Isolation in die Innenrillen 13 hineingedrückt werden. Sodann wird der trommelartige Grundkörper mit den Kabellitzen 19 und 20 soweit in den Hülsenkörper 10 hineingepreßt, bis die freien Endflächen sowohl des Hülsenkörpers als auch des Grundkörpers miteiander fluchten. Wegen der konischen Ausgestaltung der Innenrillen 13 preßt sich der Boden der Innenrillen 13 jweils in die relativ weiche Isolation hinein, wodurch eine Abdichtung um die Kabellitzen 19 und 20 erzielt wird.

Nach dem Einsetzen wird der Innenraum des Hülsenkörpers 10 mit Gießharz ausgefüllt und nach Erhärten des Gießharzes ist die Steckdurchführung fertig.

Es ist festzuhalten, daß die Herstellung der Steckdurchführung maschinell erfolgen kann. Dies geschieht wie folgt:
Von mehreren Kabeltrommeln werden die Kabellitzen 19 und 20 abgezogen und an dem Bereich 21 und 22 abisoliert. Sodann werden sie innerhalb eines geeigneten Werkzeuges der Maschine, mit der die Steckdurchführung hergestellt werden soll, in die Nuten 18 des trommelartigen Grundkörpers hineingedrückt und zu derjenigen Station geführt, in der der Hülsenkörper 10 auf die weitere Bearbeitung wartet. Dabei sind die Kabellitzen 19 und 20 schon durch das Innere des Hülsenkörpers 10 hindurchgeführt. Nach Ablängen der Kabellitzen 19 und 20 erfolgt dann das Ausgießen.

Eine zweite Ausgestaltung der erfindungsgemäßen Steckdurchführung besitzt einen Hülsenkörper 110, an dessen einem Ende ein leistenförmiger Innenflansch 111 angeformt ist, der axial verlaufende Innenrillen 112 aufweist, die in ihrem Durchmesser sich zum unteren Ende des Hülsenkörpers 110 hin verjüngen.

Innerhalb des Hülsenkörper 110 sind zwei in Abstand zueinander angeordnete und jeweils mit dem entsprechenden Ende fluchtende Grundkörper 113 und 114 vorgesehen, die an ihrem Außenumfang Nuten 115 aufweisen, von denen diejenigen Nuten 115 des Grundkörpers 113 zusammen mit den Innenrillen 112 einen Kanal 116 bilden, der Aderleitungen (auch Kabellitzen genannt) aufnimmt und dem Außenumfang der Isolation der Kabellitzen angepaßt ist.

Innerhalb der ringförmigen Grundkörper 113 und 114, auch Ringkörper 113 und 114 genannt, befindet sich ein zapfenartiger Innenkörper 118, der aus zwei Innenkörperteilen 119 und 120 zusammengesetzt ist, die mittels eines Distanzzapfens 121 auf Abstand und zusammengehalten werden. Der Distanzzapfen 121 greift mit einem Bereich geringeren Durchmessers 122 ins Innere des Innenkörpers 120 ein und mit einem weiteren Bereich 123 ebenfalls verringerten Durchmessers ins Innere des Innenkörpers 119; der dazwischen liegende Abschnitt 124 des Distanzzapfens hält die beiden Innenkörperteile auf Abstand und zusammen.

Der Ringkörper 113 besitzt in seiner Innenfläche Innenrillen 125, die den Innenrillen 112 entsprechen und die sich ebenfalls nach außen hin konisch verjüngen. Sie haben im wesentlichen die gleiche Form wie die Innenrillen 112. An der Außenfläche des Innenkörperteiles 118 befindet sich eine radial umlaufende Leiste 126, in der Nuten 127 eingebracht sind, die in Längsrichtung verlaufen und am Umfang ebenso wie die Nuten 115 am Ringkörper 113 gleichmäßig am Umfang verteilt sind. Die Innenrillen 125 bilden mit den Nuten 127 Kanäle 128, die zur Aufnahme von Kabellitzen 129 bzw. deren Isolation geeignet und ausgebildet und bemessen sind. Der Innenkörper 120 besitzt auf seinem Außenumfang ebenfalls den Nuten 127 entsprechende Nuten 130, die zusammen mit Innenrillen 131 einen Kanal 132 bilden, der den Kanälen 128 entspricht und demgemäß zur Aufnahme der Isolierbereiche von Litzen 129 dient.

Der zwischen den Ringkörpern 113 und 114 liegende Abschnitt der Litzen ist abisoliert, siehe Abschnitt 133.

Zum Einsetzten bzw. Fertigstellen der Steckdurchführung nach Figur 4 bzw. 5 wird wie folgt vorgegangen:
Zunächst werden die Kabellitzen 129 in die fluchtenden Nuten 130/127 des Innenkörpers eingesetzt, wobei diese Nuten einen Bereich mehr als 180° der Kabellitzen umfassen, wodurch die Kabellitzen an dem Innenkörper 118 festgerastet werden können. Nachdem sie festgerastet sind, werden der Ringkörper 113 und danach der Ringkörper 114 in entsprechendem Abstand dazu darübergesetzt, wodurch in jedem Fall der Ringkörper 113 und darüberhinaus auch der Ringkörper 114 auf den Kabellitzen fixiert ist. Die Zugentlastung zwischen den Kabellitzen 129 und der Steckdurchführung wird durch die konisch verjüngten Innenrillen 125 bewirkt, durch die die isolierten Teilbereiche der Kabellitzen 129 gegen die Innenfläche der Nut 127 gedrückt sind.

Nun werden in die Nuten 115 der Ringkörper 113 und 114 weitere Kabellitzen 117 eingeschnappt; die Nuten 115 umfassen aufgrund ihrer Formgebung die Kabellitzen 117 ebenfalls auf einen Bereich von mehr als 180°, wodurch ebenfalls ein Festrasten der Kabellitzen an den Ringkörpern 113 und 114 ermöglicht ist.

Schlußendlich wird die Hülse 110 darübergeschoben und zwar dergestalt, daß die im Inneren des Hülsenkörpers befindlichen Innenrillen 112 gegen die Außenflächen der Kabellitzen 117 angedrückt werden, wobei durch die ebenfalls konische Ausgestaltung der Innenrillen 112 die außen befindlichen Kabellitzen 117 in die zugehörigen Nuten 115 hineindrücken, wodurch eine Fixierung auch der außen befindlichen Kabellitzen bewirkt wird.

Nachdem diese Anordnung so fertiggestellt ist, wie in den Figuren 4 und 5 dargestellt, wird der gesamte Raum innerhalb des Hülsenkörpers 110 mit Gießharz ausgegossen, wodurch eine erfindungsgemäße Steckdurchführung gebildet ist.

Es sei Bezug genommen auf die Figur 7. Die hier dargestellte Steckdurchführung besitzt den Hülsenkörper 110, der sich von dem Hülsenkörper 110 nach Figur 4 und Figur 1 nicht unterscheidet, weswegen dieser Hülsenkörper die gleiche Bezugsziffer erhalten hat. Innerhalb des Hülsenkörpers 110 befindet sich ein Ringkörper 141 und der Ringkörper 141 umfaßt selbst wiederum einen Innenkörper 142. Der Ringkörper 141 und der Innenkörper 142 werden dann anhand der Figuren 8 bis 12 näher beschrieben.

Der Innenkörper 142, wie er in den Figuren 8 bis 10 dargestellt ist, besitzt an seinen beiden Enden Nutenabschnitte 143 und 144, in denen längsverlaufende Nuten 145 und 146 eingebracht sind, die miteinander fluchten. Die Nuten 145 und 146 sind in den jeweiligen Nutenabschnitten gleichmäßig am Umfang verteilt und sind so tief eingebracht, daß die Innenfläche 147 der einzelnen Nuten 145 und 146 mehr als 180° umgreift. Der Bereich zwischen den beiden Rillenabschnitten ist an sich gegenüberliegenden Seiten durch Einfräsungen 148 und 149 abgeflacht, wodurch ein längsverlaufender Quersteg 150 gebildet ist, der in seinem mittleren Bereich eine jeweils kreisbogenförmige Verdickung 151 enthält, die ebenfalls in Längsrichtung des Innenkörpers verläuft. Im Bereich der in der Zeichnung Figur 5 oben befindlichen Stirnfläche besitzt der Innenkörper 142 eine Sacklochbohrung 152, die angenähert die Hälfte des Innenkörpers durchdringt; im Bereich des Sacklochbodens befindet sich ein Querschlitz 153, der die Verdickung 151 senkrecht zur Längsachse des Innenkörpers 142 durchdringt.

Die Figuren 11 und 12 zeigen den Ringkörper 141. Der Ringkörper 141 besitzt an seinen beiden Enden außenliegende Leisten 154 und 155, in denen Nuten 156 und 157 eingebracht sind. Im Bereich der in Figur 8 unten liegenden Leiste 154 befindet sich im Inneren des Ringkörpers 141 eine Innenleiste 158, die der Anzahl der Nuten 145 und 146 am Innenkörper 142 entsprechende Innenrillen 159 aufweist, die ähnlich wie die Innenrillen 112 sich nach unten zum freien Ende des Ringkörpers 141 verjüngen. Der Ringkörper 141 besitzt im Bereich zwischen den beiden Leisten diametral sich gegenüberliegende Querausnehmungen 160 bzw. 161. Die Innenfläche 162 des Ringkörpers 141 ist außer der Innenleiste 158 glatt.

Die Montage der Steckdurchführung gemäß Figuren 6 und 7 erfolgt auf die gleiche Weise wie die Montage der Steckdurchführung gemäß Figur 1 bis 3 bzw. 4 und 5:
Zunächst werden Kabellitzen 163 in die Nuten 145 und 146 des Innenkörpers 142 eingerastet, dergestalt, daß der abisolierte Bereich 164 der Kabellitzen 163 zwischen den beiden Nutenabschnitten 143 und 144 zu liegen kommt. Danach wird der Innenkörper 142 zusammen mit den darin befindlichen Kabellitzen 163 in den Ringkörper 141 eingefügt, wobei die Kabellitzen 163 in die Innenrillen 159 aufgrund deren konischen Form hineingedrückt werden. Danach werden weitere Kabellitzen 163 in die Nuten 156 und 157 am Ringkörper 141 eingefügt, wobei auch hier eine Festrastung der Kabellitzen in den Nuten 156 und 157 erfolgt. Schlußendlich wird die gesamte Einheit von Ringkörper 141, Innenkörper 142 und Kabellitzen 163 in den Hülsenkörper 110 eingefügt und zwar in der Weise, wie bei der Steckdurchführung nach Figuren 4 und 5. Über die Sacklochbohrung 152 kann dann der Innenraum des Hülsenkörpers 110 mit Gießharz ausgegossen werden. Dabei fließt das Gießharz gemäß Pfeilrichtung P in die Sacklochbohrung 152, also in den Innenkörper 142 hinein und aus dem Querschlitz 153 aus dem Innenkörper 142 heraus ins Innere des Ringkörpers 141. Über die im Ringkörper 141 befindlichen Querausnehmungen 160 und 161 gelangt das Gießharz in das Innere des Hülsenkörpers 110, wodurch die gesamte Steckdurchführung mit Gießharz ausgegossen ist.

## Patentansprüche

1. Explosions- und/oder schlagwettergeschützte Steckdurchführung, mit einem Hülsenkörper (10), mit darin befindlichen Führungselementen (13, 14 und 18) für mehrere elektrische Aderleitungen (19, 20), die einen abisolierten Bereich (21, 22) aufweisen, der sich innerhalb des Bereiches der Hülsenkörpererstreckung befindet, und mit einem Gießharzausguß, dadurch gekennzeichnet, daß innerhalb des Hülsenkörper (10) ein trommelartiger Innenkörper (14) vorgesehen ist, der an seinen beiden Enden gleichmäßig am Umfang verteilte, axial verlaufende, jeweils miteinander fluchtende Nuten (18) aufweist, in die die Kabellitzen (19) mit ihrer Isolation einrastbar eingesetzt sind, und daß an einem Ende des Hülsenkörpers (10) der Anzahl der Nuten (18) entsprechende, ebenfalls axial verlaufende Innenrillen (13) vorgesehen sind, die sich zum freien Ende des Hülsenkörpers (10) hin konisch verjüngen.

2. Steckdurchführung nach Anspruch 1, dadurch gekennzeichnet, daß zusätzlich wenigstens ein ringförmiger Grundkörper (113, 114; 141) vorgesehen ist, der den Innenkörper (118; 142) konzentrisch umfaßt, daß der wenigstens eine Grundkörper (113, 114; 141) an seiner Außenfläche mehrere axial verlaufende, gleichmäßig am Umfang des wenigstens einen Grundkörpers (113, 114; 141) angeordnete Nuten (115; 127, 130; 145, 146; 156, 157) aufweist, und daß der Hülsenkörper (110), der den wenigstens einen Grundkörper (113, 114; 141) konzentrisch umfaßt, und der wenigstens eine Grundkörper jeweils an seiner bzw. ihren Innenflächen der Anzahl der Nuten (115; 127, 130; 145, 146; 156, 157) entsprechende Innenrillen (112; 125; 159) aufweist bzw. aufweisen, welche Nuten (115; 127, 130; 145, 146; 156, 157) und Innenrillen (112; 125; 159) die Aderleitungen (117; 163) zwischen sich führen.

3. Steckdurchführung nach mindestens einem der Ansprüche 1 und 2, dadurch gekennzeichnet, daß der Konuswinkel (Alpha) ca. 1° beträgt.

4. Steckdurchführung nach einem der Ansprüche 1 bis 3, dadurch gekennzeichnet, daß der Innenkörper (14) trommelartig ausgebildet ist.

5. Steckdurchführung nach einem der Ansprüche 1 bis 4, dadurch gekennzeichnet, daß zur Bildung der Innenrillen (13) am Hülsenkörper (10) ein Innenflansch (12) vorgesehen ist, dessen Innendurchmesser dem Außendurchmesser des umfaßten Innenkörpers (14) im Bereich der Nuten (18) entspricht.

6. Steckdurchführung nach Anspruch 5, dadurch gekennzeichnet, daß der trommelartige Innenkörper (14) an seinen beiden Enden Bordränder (15, 16) aufweist, deren Außendurchmesser der Tiefe der Nuten (18) entsprechend größer ist als der Durchmesser des dazwischen befindlichen Bereiches (17).

7. Steckdurchführungen nach einem der vorherigen Ansprüche, dadurch gekennzeichnet, daß die Länge des mittleren Bereiches (17) angenähert der Länge der jeweils eines Bordrandes entspricht.

8. Steckdurchführung nach einem der Ansprüche 1 bis 7, dadurch gekennzeichnet, daß im Bereich jeweils eines Endes des Hülsenkörpers (110) jeweils ein Grundkörper (113, 114) vorgesehen ist und daß derjenige Grundkörper (113), dessen Innenrillen (125) sich verjüngen, im Bereich des Endes des Hülsenkörpers (110) angeordnet ist, an dem sich die sich verjüngenden Innenrillen (112) des Hülsenkörpers (110) befinden.

9. Steckdurchführung nach einem der vorherigen Ansprüche, dadurch gekennzeichnet, daß der Grundkörper (141) als Ringkörper einstückig ausgebildet ist.

10. Steckdurchführung nach Anspruch 9, dadurch gekennzeichnet, daß der Grundkörper (141) an seinen beiden Enden Leisten (154, 155) an seiner Außenseite aufweist, in denen die Längsnuten (156, 157) eingebracht sind.

11. Steckdurchführung nach Anspruch 10, dadurch gekennzeichnet, daß an einem Ende des Grundkörpers (141) eine Innenleiste (158) vorgesehen ist, die Innenrillen (159) aufweist, deren Anzahl der Anzahl der Nuten des Innenkörpers (118, 142) entspricht.

12. Steckdurchführung nach Anspruch 11, dadurch gekennzeichnet, daß der Bereich des Grundkörpers (141) zwischen den Leisten (154, 155) einen Außendurchmesser aufweist, der geringer ist als der Kerndurchmesser der Leisten (154, 155).

13. Steckdurchführung nach Anspruch 12, dadurch gekennzeichnet, daß der Bereich zwischen den beiden Leisten (154, 155) Querausnehmungen (160, 161) aufweist.

14. Steckdurchführung nach einem der vorigen Ansprüche, dadurch gekennzeichnet, daß der Innenkörper (118) im Bereich seiner beiden Enden je eine umlaufende Leiste (126) mit gegenüber dem dazwischen befindlichen Bereich vergrößerten Durchmesser aufweist, in welchen Leisten die Nuten eingebracht sind.

15. Steckdurchführung nach Anspruch 14, dadurch gekennzeichnet, daß der Innenkörper aus zwei mittels eines Distanzzapfens zusammengesetzten Körperteilen besteht.

16. Steckdurchführung nach einem der Ansprüche 1 bis 15, dadurch gekennzeichnet, daß der Innenkörper (142) einstückig ausgebildet ist, daß an seinen beiden Enden je ein Abschnitt mit Nuten (145, 146) vorgesehen sind und daß in dem Bereich zwischen den Abschnitten mit den Nuten beidseitig Einfräsungen (148, 149) vorgesehen sind, die einen Quersteg (150) bilden.

17. Steckdurchführung nach Anspruch 16, dadurch gekennzeichnet, daß der Innenkörper (142) eine von einer Stirnfläche ausgehende Sacklochbohrung (152) aufweist, die angenähert die halbe Länge des Innenkörpers (142) überdeckt und daß im Bereich des Bodens der Sacklochbohrung (152) ein Querschlitz (153) vorgesehen ist.

## Claims

1. Explosion-proof and/or flameproof plug-in bushing which has a sleeve body (10) and guide elements (13, 14 and 18), located therein, for a plurality of electrical wire leads (19, 20) which have a stripped region (21, 22) which is located inside the region of the sleeve body extent, and which bushing has a cast-resin outlet, characterised in that a drum-like inner body (14) is provided inside the sleeve body (10), which inner body (14) has at its two ends grooves (18) which are distributed uniformly on the circumference, run axially, are in each case aligned with one another and into which the cable strands (19) are inserted such that they can be caught in by their insulation, and in that inner grooves (13) are provided at one end of the sleeve body (10), which inner grooves (13) correspond to the number of grooves (18), likewise run axially and taper conically towards the free end of the sleeve body (10).

2. Plug-in bushing according to Claim 1, characterised in that at least one annular base body (113, 114; 141) is additionally provided, which surrounds the inner body (118; 142) concentrically, in that the at least one base body (113, 114; 141) has a plurality of grooves (115; 127, 130; 145, 146; 156, 157) on its circumference which grooves (115; 127, 130; 145, 146; 156, 157) run axially and are arranged uniformly on the circumference of at least one base body (113, 114; 141), and in that the sleeve body (110), which concentrically surrounds the at least one base body (113, 114; 141), and the at least one base body in each case has or have on its or their inner surfaces respectively inner grooves (112; 125; 159) which correspond to the number of grooves (115; 127, 130; 145, 146; 156, 157), which grooves (115; 127, 130; 145, 146; 156, 157) and inner grooves (112; 125; 159) guide the wire leads (117; 163) between them.

3. Plug-in bushing according to at least one of Claims 1 and 2, characterised in that the coning angle (alpha) is approximately 1°.

4. Plug-in bushing according to one of Claims 1 to 3, characterised in that the inner body (14) is constructed like a drum.

5. Plug-in bushing according to one of Claims 1 to 4, characterised in that, in order to form the inner grooves (13) on the sleeve body (10), an inner flange (12) is provided whose internal diameter corresponds to the external diameter of the surrounded inner body (14), in the region of the grooves (18).

6. Plug-in bushing according to Claim 5, characterised in that the drum-like inner body (14) has at its two ends rims (15, 16) whose external diameter is greater than the diameter of the region (17) located in between by the depth of the grooves (18).

7. Plug-in bushings according to one of the preceding claims, characterised in that the length of the central region (17) corresponds approximately to the length of the respective one rim.

8. Plug-in bushing according to one of Claims 1 to 7, characterised in that in each case one base body (113, 114) is provided in the region of in each case one end of the sleeve body (110), and in that that base body (113) whose inner grooves (125) taper is arranged in the region of the end of the sleeve body (110) on which the tapering inner grooves (112) of the sleeve body (110) are located.

9. Plug-in bushing according to one of the preceding claims, characterised in that the base body (141) is constructed integrally as an annular body.

10. Plug-in bushing according to Claim 9, characterised in that the base body (141) has at its two ends strips (154, 155) on its outside, in which strips (154, 155) the longitudinal grooves (156, 157) are incorporated.

11. Plug-in bushing according to Claim 10, characterised in that an inner strip (158) is provided at one end of the base body (141), which inner strip (158) has inner grooves (159) the number of which corresponds to the number of grooves of the inner body (118, 142).

12. Plug-in bushing according to Claim 11, characterised in that the region of the base body (141) between the strips (154, 155) has an external diameter which is smaller than the core diameter of the strips (154, 155).

13. Plug-in bushing according to Claim 12, characterised in that the region between the two strips (154, 155) has lateral recesses (160, 161).

14. Plug-in bushing according to one of the preceding claims, characterised in that the inner body (118) has in the region of its two ends in each case one circumferential strip (126) having a diameter which is enlarged in comparison with the region located in between, in which strips the grooves are incorporated.

15. Plug-in bushing according to Claim 14, characterised in that the inner body consists of two body parts which are assembled by means of a spacer peg.

16. Plug-in bushing according to one of Claims 1 to 15, characterised in that the inner body (142) is constructed integrally, in that in each case one section having grooves (145, 146) is provided at its two ends and in that milled slots (148, 149), which form a lateral web (150), are provided on both sides in the region between the sections having the grooves.

17. Plug-in bushing according to Claim 16, characterised in that the inner body (142) has a blind hole (152) which originates from one end surface and approximately covers half the length of the inner body (142), and in that a lateral slot (153) is provided in the region of the base of the blind hole (152).

## Revendications

1. Traversée de câble fermée anti-déflagrante et/ou anti-grisouteuse, comportant un manchon (10) avec, à l'intérieur de celui-ci, des éléments de guidage (13, 14, et 18) pour plusieurs conducteurs (19, 20) électriques qui présentent une partie (21, 22) dénudée située à l'intérieur du manchon, ainsi qu'un remplissage de résine moulée, caractérisée par le fait qu'il est prévu, à l'intérieur du manchon (10), un élément intérieur (14) en forme de tambour qui présente, à ses deux extrémités, des gorges (18) axiales mutuellement alignées qui sont réparties régulièrement sur le pourtour et dans lesquelles les torons de câble (19) s'enclenchent avec leur isolation, et par le fait qu'il est prévu, à une extrémité du manchon (10), des rainures (13) intérieures, également axiales, en nombre égal à celui des gorges (18), lesquelles se rétrécissent en forme de cône en direction de l'extrémité libre du manchon (10).

2. Traversée de câble fermée selon la revendication 1, caractérisée par le fait qu'il est prévu en outre au moins un élément de base (113, 114; 141) annulaire qui entoure concentriquement l'élément intérieur (118; 142), par le fait que l'élément de base (113, 114; 141), au nombre d'au moins un, présente sur sa surface extérieure plusieurs gorges (115; 127, 130; 145, 146; 156, 157) axiales qui sont régulièrement réparties sur le pourtour dudit élément de base (113, 114; 141), au nombre d'au moins un, et par le fait que le manchon (110) qui entoure concentriquement l'élément de base (113, 114; 141), au nombre d'au moins un, et l'élément de base, au nombre d'au moins un, présente(nt) respectivement sur sa ou leur surface(s) intérieure(s) des rainures intérieures (112; 125; 159) en nombre égal au gorges (115, 127, 130; 145, 146; 156, 157), lesquelles gorges (115, 127, 130; 145, 146; 156, 157) et rainures intérieures (112; 125; 159) enserrent entre elles les conducteurs (117; 163).

3. Traversée de câble fermée selon l'une au moins des revendications 1 et 2, caractérisée par le fait que l'angle de cône (alpha) est de 1° environ.

4. Traversée de câble fermée selon l'une des revendications 1 à 3, caractérisée par le fait que l'élément intérieur (14) a la forme d'un tambour.

5. Traversée de câble fermée selon l'une des revendications 1 et 4, caractérisée par le fait qu'il est prévu, pour former les rainures intérieures (13) sur le manchon (10), un collet intérieur (12) dont le diamètre intérieur correspond au diamètre extérieur de l'élément intérieur (14) entouré dans la région des gorges (18).

6. Traversée de câble fermée selon la revendication 5, caractérisée par le fait que l'élément intérieur (14) en forme de tambour présente, à ses deux extrémités, des rebords (15, 16) dont le diamètre extérieur est supérieur de la valeur de la profondeur des gorges (18) au diamètre de la partie (17) située entre lesdits rebords.

7. Traversée de câble fermée selon l'une des revendications précédentes, caractérisée par le fait que la longueur de la partie (17) médiane correspond sensiblement à la longueur d'un rebord.

8. Traversée de câble fermée selon l'une des revendications 1 à 7, caractérisée par le fait qu'il est prévu, dans la région de chaque extrémité du manchon (110), un élément de base (113, 114) et par le fait que l'élément de base (113) dont les rainures intérieures (125) se rétrécissent est disposé dans la région de l'extrémité du manchon (110) où se trouvent les rainures intérieures (112) de section décroissante du manchon (110).

9. Traversée de câble fermée selon l'une des revendications précédentes, caractérisée par le fait que l'élément de base (141) se présente sous la forme d'un élément monobloc annulaire.

10. Traversée de câble fermée selon la revendication 9, caractérisée par le fait que l'élément de base (141) présente à ses deux extrémités, sur sa face extérieure, des nervures (154, 155) dans lesquelles les gorges (156, 157) longitudinales sont aménagées.

11. Traversée de câble fermée selon la revendication 10, caractérisée par le fait qu'il est prévu, à une extrémité de l'élément de base (141), une nervure (158) intérieure qui comporte des rainures intérieures (159) en nombre égal aux gorges de l'élément intérieur (118, 142).

12. Traversée de câble fermée selon la revendication 11, caractérisée par le fait que la partie de l'élément de base (141) située entre les deux nervures (154, 155) a un diamètre extérieur qui est inférieur au diamètre du noyau des nervures (154, 155).

13. Traversée de câble fermée selon la revendication 12, caractérisée par le fait que la partie située entre les deux nervures (154, 155) comporte des évidements transversaux (160, 161).

14. Traversée de câble fermée selon l'une des revendications précédentes, caractérisée par le fait que l'élément intérieur (118) présente, dans la région de ses deux extrémités, respectivement une nervures (126) circulaire de diamètre augmenté par rapport à la partie intermédiaire, nervures dans lesquelles sont aménagées les gorges.

15. Traversée de câble fermée selon la revendication 14, caractérisée par le fait que l'élément intérieur est formé de deux parties d'élément assemblées par un élément d'espacement.

16. Traversée de câble fermée selon l'une des revendications 1 à 15, caractérisée par le fait que l'élément intérieur (142) est monobloc, par le fait qu'il est prévu à ses deux extrémités respectivement une partie comportant des gorges (145, 146) et par le fait qu'il est prévu, dans la zone située entre les parties portant les gorges, de chaque côté, des fraisures (148, 149) qui forment une barrette (150) transversale.

17. Traversée de câble fermée selon la revendication 16, caractérisée par le fait que l'élément intérieur (142) présente un trou borgne (152) qui s'étend à partir d'une face frontale et sur sensiblement la moitié de la longueur de l'élément intérieur (142) et par le fait qu'il est prévu, dans la région du fond dudit trou borgne (152) une fente transversale (153).
